# EUROPEAN PATENT SPECIFICATION

(11) **EP 3 107 335 B1**
(45) Date of publication and mention of the grant of the patent: **29.05.2019**
(21) Application number: 14886163.6
(22) Date of filing: 18.03.2014
(51) Int. Cl.: H04W 48/16, H04W 52/02

(54) **NETWORK SEARCHING METHOD OF TERMINAL AND TERMINAL**
NETZWERKSUCHVERFAHREN EINES ENDGERÄTS UND ENDGERÄT
PROCÉDÉ DE RECHERCHE DE RÉSEAU D'UN TERMINAL ET TERMINAL

(43) Date of publication of application: 21.12.2016
(73) Proprietor: Huawei Device Co., Ltd., Dongguan, Guangdong 523808 (CN)
(72) Inventor: LIU, Zhenyu, Shenzhen Guangdong 518129 (CN); WANG, Shoucheng, Shenzhen Guangdong 518129 (CN)
(74) Representative: Pfenning, Meinig & Partner mbB
(86) International application number: PCT/CN2014/073563
(87) International publication number: WO 2015/139189

(56) References cited:
- CN-A- 101 340 718
- CN-A- 102 224 745
- CN-A- 102 857 998
- US-A1- 2009 042 565
- US-A1- 2009 098 869
- US-A1- 2014 003 405

## Description

### TECHNICAL FIELD

The present disclosure relates to the communications field, and in particular, to a network search method for a terminal and a terminal.

### BACKGROUND

Currently, a general network search process of a terminal is:
s1: After a terminal loses a network connection, the terminal fails to detect a wireless link; then the terminal starts a network search process.
s2: If no network is found in step s1, a network search is initiated again n minutes later.
s3: If the network search fails in step s2, a network search operation is performed again 2*n minutes later.

In the network search solution, no matter what a geographical environment in which the terminal is located is like (for example, the terminal is located in a high mountain, or the terminal is located in a city), before a network is found, the terminal keeps searching for a network repeatedly according to a fixed network-search period. In this case, for areas such as high mountains or seas generally with a relatively weak network signal or hardly with a network signal, using the solution undoubtedly causes a waste of battery power. To sum up, in the network search solution in the prior art, frequent network searches cause relatively high power consumption, and further cause particularly fast electricity consumption of the terminal.

US 2009/098869A discloses that the telephone 10 uses this location information to influence how or indeed whether it searches for an active wireless access point 20 by comparing the location information to a list of known locations.

US 2014/003405A discloses that the mobile terminal may query a look-up table of WLAN and/or WWAN coverage (e.g. either maintained locally at the mobile terminal or maintained at a location services server). The mobile terminal may use the look-up to determine that, based on its current location, it is currently in a geographic area where WLAN and/or WLAN coverage is expected or conversely not expected.

US 2009/042565A discloses activating scanning or increasing a scanning frequency in support of a position determination application when a wireless communication device WCD is near a positioning-enabled environment, and deactivating or decreasing the scanning frequency when the WCD is not in a positioning-enabled environment.

### SUMMARY

The present invention is as defined in the appended independent claims. In view of this, the present disclosure provides a network search method for a terminal and a terminal, so that a network search time interval can be flexibly set according to a geographical environment in which the terminal is located, and a standby time of the terminal can be effectively controlled.

A first aspect of the present disclosure provides a network search method for a terminal, and the method may include:
acquiring, by a terminal, geographical location information of the terminal, and determining geographical environment in which the terminal is located according to the acquired geographical location information; and
setting, by the terminal, a network search time interval corresponding to the geographical environment according to the determined geographical environment.

With reference to the first aspect, in a first feasible implementation manner, the acquiring, by a terminal, geographical location information of the terminal, and determining, according to the acquired geographical location information, geographical environment in which the terminal is located includes:
acquiring, by the terminal, the geographical location information of the terminal by using a positioning system; and
determining, by the terminal, the geographical environment in which the terminal is located according to the acquired geographical location information and a map that is stored locally on the terminal.

With reference to the first feasible implementation manner of the first aspect, in a second feasible implementation manner, the geographical location information includes latitude and longitude information ,or geographical coordinates; and
the determining, by the terminal, the geographical environment in which the terminal is located according to the acquired geographical location information and a map that is stored locally on the terminal comprises:
inputting, by the terminal, the latitude and longitude information, or the geographical coordinates into the map that is stored locally on the terminal, and determining the geographical environment in which the terminal is located according to a geographical name displayed on the locally stored map.

With reference to the first aspect to the second feasible implementation manner of the first aspect, in a third feasible implementation manner, the setting, by the terminal, a network search time interval corresponding to the geographical environment according to the determined geographical environment includes:
setting the network search time interval for the terminal to be greater than a first time threshold when the geographical environment belongs to a first geographical environment in which a network signal is less than a preset threshold; and/or
setting the network search time interval for the terminal to be less than a second time threshold when the geographical environment belongs to a second geographical environment in which a network signal is greater than a preset threshold.

With reference to the first aspect to the third feasible implementation manner of the first aspect, in a fourth feasible implementation manner, the method further includes:
performing network search operation when the terminal detects that backlight of screen is activated.

A second aspect of the present disclosure provides a terminal, and the terminal may include:
a positioning module, configured to acquire geographical location information of the terminal, and determine geographical environment in which the terminal is located according to the acquired geographical location information; and
a period setting module, configured to set a network search time interval corresponding to the geographical environment according to the geographical environment determined by the positioning module.

With reference to the second aspect, in a first feasible implementation manner, the positioning module includes:
a location information acquiring module, configured to acquire geographical location information of the terminal by using a positioning system; and
a geographical environment determining module, configured to determine the geographical environment in which the terminal is located, according to the geographical location information acquired by the location information acquiring module and a map that is stored locally on the terminal.

With reference to the first feasible implementation manner of the second aspect, in a second feasible implementation manner, the geographical location information includes latitude and longitude information ,or geographical coordinates; and
the geographical environment determining module is specifically configured to input the latitude and longitude information, or the geographical coordinates into the map that is stored locally on the terminal, and determine the geographical environment in which the terminal is located according to a geographical name displayed on the locally stored map.

With reference to the second aspect to the second feasible implementation manner of the second aspect, in a third feasible implementation manner, the period setting module includes:
a determining module, configured to determine whether the geographical environment belongs to a first geographical environment in which a network signal is less than a preset threshold, and/or configured to determine whether the geographical environment belongs to a second geographical environment in which a network signal is greater than a preset threshold; and/or
a setting module, configured to set the network search time interval for the terminal to be greater than a first time threshold when the geographical environment belongs to the first geographical environment; and set the network search time interval for the terminal to be less than a second time threshold when the geographical environment belongs to the second geographical environment.

With reference to the second aspect to the third feasible implementation manner of the second aspect, in a fourth feasible implementation manner, the terminal further includes:
an emergency network-search module, configured to perform a network search operation when the terminal detects that backlight of screen is activated.

A third aspect of the present disclosure provides a terminal, and the terminal may include a locator, a processor, and a memory;
wherein the locator, the processor, wherein the memory are coupled to each other using a bus; wherein the locator is configured to acquire geographical location information of the terminal; and
the processor is configured to perform the following operations stored in the memory: determine geographical environment in which the terminal is located according to the acquired geographical location information; and set a network search time interval corresponding to the geographical environment according to the determined geographical environment.

With reference to the third aspect, in a first feasible implementation manner,
the processor is further configured to determine the geographical environment in which the terminal is located, according to the geographical location information acquired by the locator and a map that is stored in the memory.

With reference to the first feasible implementation manner of the third aspect, in a second feasible implementation manner, the geographical location information includes latitude and longitude information, or geographical coordinates; and
the processor is further configured to acquire a geographical name that is on the map corresponding to the latitude and longitude information according to the latitude and longitude information and the map that is stored in the memory, and determine the geographical environment in which the terminal is located according to the geographical name; or
the processor is further configured to acquire a geographical name that is on the map corresponding to the geographical coordinates according to the geographical coordinates and the map that is stored in the memory, and determines the geographical environment in which the terminal is located according to the geographical name.

With reference to the third aspect to the second feasible implementation manner of the third aspect, in a third feasible implementation manner, that the processor
the processor is further configured to determine whether the geographical environment belongs to a first geographical environment in which a network signal is less than a preset threshold, and/or the processor is further configured to determine whether the geographical environment belongs to a second geographical environment in which a network signal is greater than a preset threshold; and/or
set the network search time interval for the terminal to be greater than a first time threshold when the geographical environment belongs to the first geographical environment; and set the network search time interval for the terminal to be less than a second time threshold when the geographical environment belongs to the second geographical environment.

With reference to the third aspect to the third feasible implementation manner of the third aspect, in a fourth feasible implementation manner, the terminal further includes a screen, and the processor is further configured to perform a network search operation when backlight of the screen is activated.

A fourth aspect of the present disclosure provides a computer storage medium, where the computer storage medium may store a program, and when the program is executed, some or all steps of the method according to the embodiments of the present disclosure may be included.

It can be seen from the above that in some feasible implementation manners of the present disclosure, a terminal acquires geographical location information of the terminal, and determines, according to the acquired geographical location information, a geographical environment in which the terminal is located; and the terminal sets, according to the determined geographical environment, a network search time interval corresponding to the geographical environment. Therefore, a network search time interval may be set flexibly according to a different geographical environment in which the terminal is located. Further, a relatively long network search time interval may be set when the geographical environment in which the terminal is located is a geographical environment with a relatively weak network signal; and a relatively short network search time interval may be set when the geographical environment in which the terminal is located is a geographical environment with a relatively strong network signal. Therefore, according to embodiments of the present disclosure, power consumption of a battery of the terminal can be effectively reduced, and further a standby time of the terminal is effectively increased.

### BRIEF DESCRIPTION OF DRAWINGS

FIG. 1 is a schematic flowchart of an embodiment of a network search method for a terminal according to the present disclosure;
FIG. 2 is a schematic diagram of structural composition of an embodiment of a terminal according to the present disclosure;
FIG. 3 is a schematic diagram of structural composition of an embodiment of a positioning module 21 according to the present disclosure;
FIG. 4 is a schematic diagram of structural composition of an embodiment of a period setting module 22 according to the present disclosure;
FIG. 5 is a schematic diagram of structural composition of another embodiment of a terminal according to the present disclosure; and
FIG. 6 is a schematic diagram of structural composition of another embodiment of a terminal according to the present disclosure.

### DESCRIPTION OF EMBODIMENTS

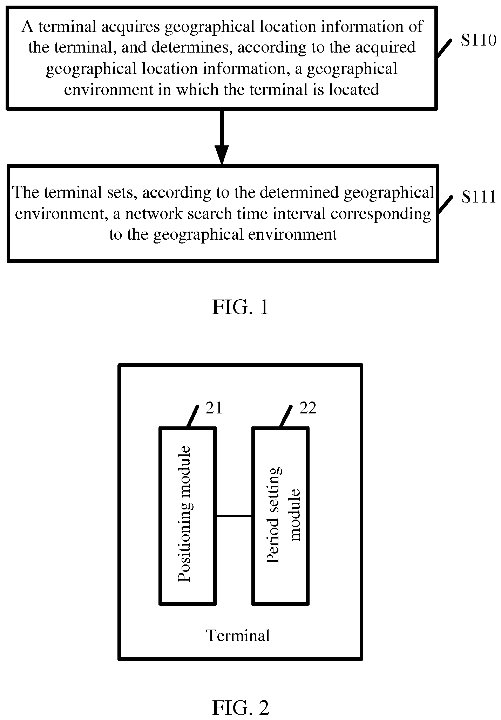

FIG. 1 is a schematic flowchart of an embodiment of a network search method for a terminal according to the present disclosure. As shown in FIG. 1, the method may include:
Step S110: A terminal acquires geographical location information of the terminal, and determines, according to the acquired geographical location information, a geographical environment in which the terminal is located.
Step Sill: The terminal sets, according to the determined geographical environment, a network search time interval (the network search time interval may also be called a network search period) corresponding to the geographical environment.

During specific implementation, in step S110, the terminal may acquire geographical location information of the terminal by using a positioning system; and determine the geographical environment in which the terminal is located, according to the acquired geographical location information and a map that is stored locally on the terminal. The positioning system may be a Global Positioning System (Global Positioning System, GPS) or another positioning system that can operate when no mobile network is available to the terminal.

During specific implementation, in step S110, the terminal may start the positioning system to acquire the geographical location information of the terminal when the terminal fails to find a network according to a default network search period; the terminal may start the positioning system to acquire the geographical location information of the terminal when the terminal needs to search for a new network; or the terminal may start the positioning system to acquire the geographical location information of the terminal when the terminal is powered on and searches for a network.

During specific implementation, the geographical location information in this embodiment of the present disclosure may include latitude and longitude information or geographical coordinates. The locally stored map in this embodiment of the present disclosure may automatically return, according to the input latitude and longitude information or geographical coordinates, a name of the geographical environment corresponding to the latitude and longitude information or the geographical coordinates. Therefore, in step S110, the terminal may determine the geographical environment (for example, high mountains, deserts, seas, or an urban district) in which the terminal is located, according to a displayed geographical name (for example, the Himalayas, the Sahara Desert, the Dead Sea, and Shenzhen) that is stored locally on the terminal. During specific implementation, the locally stored map may be an offline map provided by a third party.

Certainly, during specific implementation, the map in this embodiment of the present disclosure may output, in another manner, data about the geographical environment in which the terminal is located, so that the terminal determines the geographical environment in which the terminal is located. In summary, in this embodiment of the present disclosure, the geographical environment in which the terminal is located can be determined by using the acquired geographical location information. The geographical location information in the present disclosure includes information used for describing a specific location of the terminal, such as latitude and longitude, and geographical coordinates. The geographical environment described in this embodiment of the present disclosure includes an environmental characteristics overview, such as a high mountain environment, a desert environment, and an urban environment, corresponding to a collection of climate, land, rivers, lakes, mountains, minerals, and flora and fauna resources that are related to the geographical location.

During specific implementation, in step Sill, the terminal may determine whether the geographical environment belongs to a first geographical environment in which a network signal is less than a preset threshold. If it is determined that the geographical environment belongs to the first geographical environment in which the network signal is less than the preset threshold, the network search time interval for the terminal is set to be greater than a first time threshold. For example, network signals in geographical environments, such as mountains, seas, and deserts, are generally relatively weak. In this case, in step Sill, it can be determined that these geographical environments belong to the first geographical environment in which the network signal is less than the preset threshold. In this case, the network search time interval for the terminal may be set to be greater than the first time threshold.

During specific implementation, in step Sill, the terminal may determine whether the geographical environment belongs to a second geographical environment in which a network signal is greater than a preset threshold. If it is determined that the geographical environment belongs to the second geographical environment in which the network signal is greater than the preset threshold, the network search time interval for the terminal is set to be less than a second time threshold. For example, for a place with a relatively strong network signal, such as an urban district or home, the terminal can determine that the geographical environment belongs to the second geographical environment in which the network signal is greater than the preset threshold, and the terminal may set the network search time interval for the terminal to be less than the second time threshold. Certainly, during specific implementation, when it is determined that the geographical environment does not belong to the first geographical environment in which the network signal is less than the preset threshold, in this embodiment of the present disclosure, the network search time interval for the terminal may further be set to a system default value. Generally, the default value is less than the first time threshold. In this way, in this embodiment of the present disclosure, when a network signal is weak, a network search period may be extended, and an unnecessary network search operation may be avoided, so that electricity of the terminal is saved, and a purpose of extending a standby time of the terminal is achieved.

Specifically, the preset threshold, of the network signal, for determining whether the geographical environment belongs to the first geographical environment and the threshold, of the network signal, for determining whether the geographical environment belongs to the second geographical environment may be a same threshold, or may be different thresholds, which is not limited in this embodiment of the present disclosure.

During specific implementation, in this embodiment of the present disclosure, the second time threshold is set, and the set second time threshold may be less than the first time threshold. Therefore, in this embodiment of the present disclosure, a difference between a network search time interval for an area with a stronger network signal and a network search time interval for an area with a weaker network signal may be increased.

During specific implementation, in this embodiment of the present disclosure, when the network search period is set, specifically, a network search timer may be set to record duration of the network search period. If the timer expires, a network search operation is performed.

During specific implementation, in this embodiment of the present disclosure, the network search period may be set at a radio resource control protocol sublayer.

In addition, in this embodiment of the present disclosure, the method of the present disclosure may further include:

When the terminal detects that a backlight of screen is activated, a network search operation is performed. Advantages of the method are: a maximum demand of a user for using the terminal can be satisfied, and a case can be avoided in which the terminal cannot use a network in a long period of time because the set network search period is extremely long.

It can be seen from the above that in some feasible implementation manners of the present disclosure, a terminal acquires geographical location information of the terminal, and determines, according to the acquired geographical location information, a geographical environment in which the terminal is located; and the terminal sets, according to the determined geographical environment, a network search time interval corresponding to the geographical environment. Therefore, a network search time interval may be set flexibly according to a different geographical environment in which the terminal is located. Further, a relatively long network search time interval may be set when the geographical environment in which the terminal is located is a geographical environment with a relatively weak network signal; and a relatively short network search time interval may be set when the geographical environment in which the terminal is located is a geographical environment with a relatively strong network signal. Therefore, according to this embodiment of the present disclosure, power consumption of a battery of the terminal can be effectively reduced, and further a standby time of the terminal is effectively increased. Correspondingly, an embodiment of the present disclosure further provides a terminal device that can be used to implement the network search method for a terminal of the present disclosure. Structural composition of the terminal according to the embodiment of the present disclosure is described as follows by using an example.

FIG. 2 is a schematic diagram of structural composition of an embodiment of a terminal according to the present disclosure. As shown in FIG. 2, the terminal may include a positioning module 21 and a period setting module 22.

The positioning module 21 is configured to: acquire geographical location information of the terminal, and determine, according to the acquired geographical location information, a geographical environment in which the terminal is located.

The period setting module 22 is configured to set, according to the geographical environment determined by the positioning module 21, a network search time interval corresponding to the geographical environment.

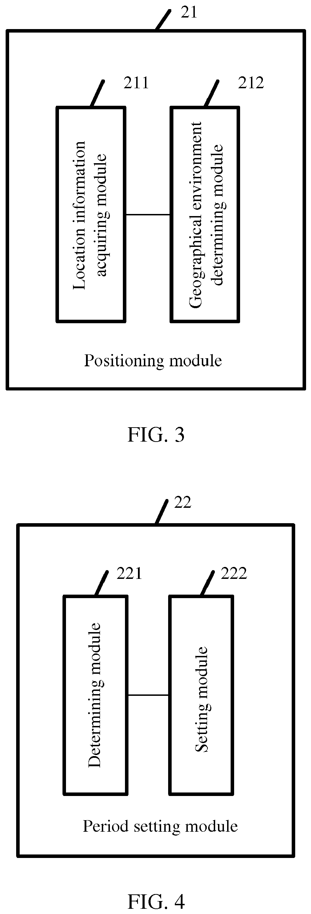

During specific implementation, as shown in FIG. 3, as a feasible implementation manner, the positioning module 21 may further include:
a location information acquiring module 211, configured to acquire geographical location information of the terminal by using a positioning system, where during specific implementation, the positioning system may be a Global Positioning System (Global Positioning System, GPS) or another positioning system that can operate when no mobile network is available to the terminal; and
a geographical environment determining module 212, configured to determine the geographical environment in which the terminal is located, according to the geographical location information acquired by the location information acquiring module 211 and a map that is stored locally on the terminal.

During specific implementation, the location information acquiring module 211 may start the positioning system to acquire the geographical location information of the terminal when network search performed according to a default network search period fails; the location information acquiring module may start the positioning system to acquire the geographical location information of the terminal when the terminal needs to search for a new network; or the location information acquiring module may start the positioning system to acquire the geographical location information of the terminal when the terminal is powered on and searches for a network.

During specific implementation, the geographical location information in this embodiment of the present disclosure may include latitude and longitude information or geographical coordinates. The locally stored map in this embodiment of the present disclosure may automatically return, according to the input latitude and longitude information or geographical coordinates, a name of the geographical environment corresponding to the latitude and longitude information or the geographical coordinates. Therefore, the geographical environment determining module 212 may specifically determine the geographical environment (for example, high mountains, deserts, seas, or an urban district) in which the terminal is located, according to a geographical name (for example, the Himalayas, the Sahara Desert, the Dead Sea, and Shenzhen) displayed on the map that is stored locally on the terminal.

Certainly, during specific implementation, the map in this embodiment of the present disclosure may also output, in another manner, data about the geographical environment in which the terminal is located, so that the terminal determines the geographical environment in which the terminal is located. In summary, in this embodiment of the present disclosure, the geographical environment in which the terminal is located can be determined by using the acquired geographical location information. During specific implementation, the locally stored map may be an offline map provided by a third party. The geographical location information in the present disclosure includes information used for describing a specific location of the terminal, such as latitude and longitude, and geographical coordinates. The geographical environment described in this embodiment of the present disclosure includes an environmental characteristics overview, such as a high mountain environment, a desert environment, and an urban environment, corresponding to a collection of climate, land, rivers, lakes, mountains, minerals, and flora and fauna resources that are related to the geographical location.

During specific implementation, as shown in FIG. 4, in some feasible implementation manners, the period setting module 22 may further include:
a determining module 221, configured to determine whether the geographical environment belongs to a first geographical environment in which a network signal is less than a preset threshold, and/or configured to determine whether the geographical environment belongs to a second geographical environment in which a network signal is greater than a preset threshold; and
a setting module 222, configured to: when the determining module 221 determines that the geographical environment belongs to the first geographical environment in which the network signal is less than the preset threshold, set the network search time interval for the terminal to be greater than a first time threshold. For example, network signals in geographical environments, such as mountains, seas, and deserts, are generally relatively weak. In this case, the determining module 221 can determine that these geographical environments belong to the first geographical environment in which the network signal is less than the preset threshold. In this case, the setting module 222 can set the network search time interval for the terminal to be greater than the first time threshold.

During specific implementation, the setting module 222 is further configured to: when the determining module 221 determines that the geographical environment belongs to the second geographical environment in which the network signal is greater than the preset threshold, set the network search time interval for the terminal to be less than a second time threshold. For example, for places with a relatively strong network signal, such as an urban district or home, the determining module 221 can determine that these geographical environments belong to the second geographical environment in which the network signal is greater than the preset threshold. In this way, the setting module 222 may set the network search time interval for the terminal to be less than the second time threshold. Certainly, during specific implementation, when the determining module 221 determines that the geographical environment does not belong to the first geographical environment in which the network signal is less than the preset threshold, the setting module 222 may further set the network search time interval for the terminal to a system default value. Generally, the default value is less than the first time threshold. In this way, in this embodiment of the present disclosure, when a network signal is weak, a network search period may be extended, and an unnecessary network search operation may be avoided, so that electricity of the terminal is saved, and a purpose of extending a standby time of the terminal is achieved.

Specifically, the preset threshold, of the network signal, for determining whether the geographical environment belongs to the first geographical environment and the threshold, of the network signal, for determining whether the geographical environment belongs to the second geographical environment may be a same threshold, or may be different thresholds, which is not limited in this embodiment of the present disclosure.

During specific implementation, in this embodiment of the present disclosure, the second time threshold is set, and the set second time threshold may be less than the first time threshold. Therefore, in this embodiment of the present disclosure, a difference between a network search time interval for an area with a stronger network signal and a network search time interval for an area with a weaker network signal may be increased.

During specific implementation, in this embodiment of the present disclosure, when the setting module 222 sets the network search period, specifically, a network search timer may be set to record duration of the network search period. If the timer expires, a network search operation is performed.

During specific implementation, in this embodiment of the present disclosure, the setting module 222 may set the network search period at a radio resource control protocol sublayer.

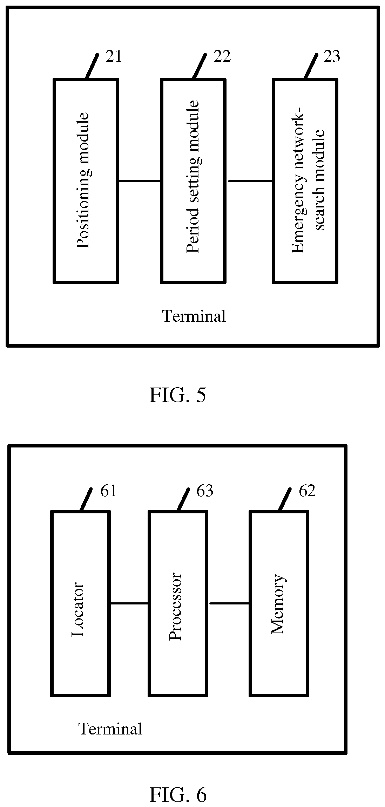

Further, as shown in FIG. 5, in another embodiment of the terminal according to the present disclosure, the terminal may further include:
an emergency network-search module 23, configured to: when the terminal detects that a backlight of screen is activated, perform a network search operation. Advantages of the module are: a maximum demand of a user for using the terminal can be satisfied, and a case can be avoided in which the terminal cannot use a network in a long period of time because the set network search period is extremely long.

It can be seen from the above that in some feasible implementation manners of the present disclosure, a terminal acquires geographical location information of the terminal, and determines, according to the acquired geographical location information, a geographical environment in which the terminal is located; and the terminal sets, according to the determined geographical environment, a network search time interval corresponding to the geographical environment. Therefore, a network search time interval may be set flexibly according to a different geographical environment in which the terminal is located. Further, a relatively long network search time interval may be set when the geographical environment in which the terminal is located is a geographical environment with a relatively weak network signal; and a relatively short network search time interval may be set when the geographical environment in which the terminal is located is a geographical environment with a relatively strong network signal. Therefore, according to this embodiment of the present disclosure, power consumption of a battery of the terminal can be effectively reduced, and further a standby time of the terminal is effectively increased.

FIG. 6 is a schematic diagram of structural composition of another embodiment of a terminal according to the present disclosure. As shown in FIG. 6, the terminal may include a locator 61, a memory 62, and a processor 63.

The locator 61 is connected to the processor 63, and the processor 63 is connected to the memory 62.

The locator 61 is configured to acquire geographical location information of the terminal.

The processor 63 is configured to: execute a program stored in the memory 62; determine, according to the acquired geographical location information, a geographical environment in which the terminal is located; and set, according to the determined geographical environment, a network search time interval corresponding to the geographical environment.

In some feasible implementation manners, that the processor 63 determines, according to the acquired geographical location information, a geographical environment in which the terminal is located includes:
the processor 63 determines the geographical environment in which the terminal is located, according to the geographical location information acquired by the locator 61 and a map that is stored in the memory 62.

In some feasible implementation manners, the geographical location information includes latitude and longitude information or geographical coordinates.

That the processor 63 determines the geographical environment in which the terminal is located, according to the geographical location information acquired by the locator 61 and a map that is stored in the memory 62 includes:
the processor 63 acquires, according to the latitude and longitude information and the map that is stored in the memory 62, a geographical name that is on the map and corresponding to the latitude and longitude information, and determines, according to the geographical name, the geographical environment in which the terminal is located; or
the processor 63 acquires, according to the geographical coordinates and the map that is stored in the memory 62, a geographical name that is on the map and corresponding to the geographical coordinates, and determines, according to the geographical name, the geographical environment in which the terminal is located.

In some feasible implementation manners, that the processor 63 sets, according to the determined geographical environment, a network search time interval corresponding to the geographical environment includes:
the processor 63 determines whether the geographical environment belongs to a first geographical environment in which a network signal is less than a preset threshold, and/or is configured to determine whether the geographical environment belongs to a second geographical environment in which a network signal is greater than a preset threshold; and
when it is determined that the geographical environment belongs to the first geographical environment in which the network signal is less than the preset threshold, the processor 63 sets the network search time interval for the terminal to be greater than a first time threshold; and when it is determined that the geographical environment belongs to the second geographical environment in which the network signal is greater than the preset threshold, the processor 63 sets the network search time interval for the terminal to be less than a second time threshold.

Specifically, in this implementation manner, the processor may determine both whether the geographical environment belongs to the first geographical environment in which the network signal is less than the preset threshold and whether the geographical environment belongs to the second geographical environment in which the network signal is greater than the preset threshold. The processor may also determine only one of the possibilities, for example, determine only whether the geographical environment belongs to the first geographical environment in which the network signal is less than the preset threshold, without determining on whether the geographical environment belongs to the second geographical environment.

In some feasible implementation manners, the terminal further includes a touchscreen (not shown in the figure). The processor 63 is further configured to: when it is detected that a screen of the touchbacklight of screen is activated, perform a network search operation.

The network search apparatus disclosed in the present disclosure may be made into an independent apparatus, or be integrated into various terminals, such as a mobile phone, a tablet personal computer (Tablet Personal Computer), laptop computer (Laptop Computer), a multimedia player, a digital camera, a personal digital assistant (personal digital assistant, PDA for short), a navigation apparatus, a mobile Internet device (Mobile Internet Device, MID), or a wearable device (Wearable Device), which is not limited in this embodiment of the present disclosure.

In addition, this embodiment of present disclosure further provides a computer storage medium. The computer storage medium may store a program. When the program is executed, some or all steps of the method described in the embodiments of the present disclosure may be executed.

It should be noted that same or corresponding technical features in the embodiments of the present disclosure may be cross-referred.

Obviously, a person skilled in the art can make various modifications and variations to the present disclosure without departing from the scope of the present disclosure. The present disclosure is intended to cover these modifications and variations provided that they fall within the scope of protection defined by the following claims.

## Claims

1. A network search method for a terminal, comprising steps of:
(a) acquiring, by a terminal, geographical location information of the terminal, and determining geographical environment in which the terminal is located according to the acquired geographical location information; and
(b) setting, by the terminal, a network search time interval corresponding to the geographical environment according to the determined geographical environment; wherein the step (a) comprises:
acquiring, by the terminal, the geographical location information of the terminal by using a positioning system; and
determining, by the terminal, the geographical environment in which the terminal is located according to the acquired geographical location information and a map that is stored locally on the terminal.

2. The network search method for a terminal according to claim 1, wherein the geographical location information comprises latitude and longitude information, or geographical coordinates; and
the determining, by the terminal, the geographical environment in which the terminal is located according to the acquired geographical location information and a map that is stored locally on the terminal comprises:
inputting, by the terminal, the latitude and longitude information, or the geographical coordinates into the map that is stored locally on the terminal, and determining the geographical environment in which the terminal is located according to a geographical name displayed on the locally stored map.

3. The network search method for a terminal according to any one of claims 1 to 2, wherein the setting, by the terminal, a network search time interval corresponding to the geographical environment according to the determined geographical environment comprises:
setting the network search time interval for the terminal to be greater than a first time threshold when the geographical environment belongs to a first geographical environment in which a network signal is less than a preset threshold; and/or
setting the network search time interval for the terminal to be less than a second time threshold when the geographical environment belongs to a second geographical environment in which a network signal is greater than a preset threshold.

4. The network search method for a terminal according to any one of claims 1 to 3, further comprising:
performing network search operation when the terminal detects that backlight of screen is activated.

5. A terminal, comprising:
a positioning module (21), configured to acquire geographical location information of the terminal, and determine geographical environment in which the terminal is located according to the acquired geographical location information; and
a period setting module (22), configured to set a network search time interval corresponding to the geographical environment according to the geographical environment determined by the positioning module;
wherein the positioning module (21) comprises:
a location information acquiring module (211), configured to acquire geographical location information of the terminal by using a positioning system; and
a geographical environment determining module (212), configured to determine the geographical environment in which the terminal is located, according to the geographical location information acquired by the location information acquiring module and a map that is stored locally on the terminal.

6. The terminal according to claim 5, wherein the geographical location information comprises latitude and longitude information, or geographical coordinates; and
the geographical environment determining module is specifically configured to input the latitude and longitude information, or the geographical coordinates into the map that is stored locally on the terminal, and determine the geographical environment in which the terminal is located according to a geographical name displayed on the locally stored map.

7. The terminal according to any one of claims 5 to 6, wherein the period setting module (22) comprises:
a determining module (221), configured to determine whether the geographical environment belongs to a first geographical environment in which a network signal is less than a preset threshold, and/or configured to determine whether the geographical environment belongs to a second geographical environment in which a network signal is greater than a preset threshold; and/or
a setting module (222), configured to set the network search time interval for the terminal to be greater than a first time threshold when the geographical environment belongs to the first geographical environment; and set the network search time interval for the terminal to be less than a second time threshold when the geographical environment belongs to the second geographical environment.

8. The terminal according to any one of claims 5 to 7, further comprising:
an emergency network-search module (23), configured to perform a network search operation when the terminal detects that backlight of screen is activated.

9. A computer readable medium, wherein the computer readable medium is adapted to store a program, and the program is executed to carry out all steps of the method according to any one of claims 1 to 4.

## Patentansprüche

1. Netzwerksuchverfahren für ein Endgerät, das die folgenden Schritte umfasst:
(a) Beschaffen durch ein Endgerät von geografischen Standortinformationen des Endgeräts und Ermitteln einer geografischen Umgebung, in dem sich das Endgerät gemäß den beschafften geografischen Standortinformationen befindet; und
(b) Einstellen durch das Endgerät eines Netzwerksuchzeitintervalls, das der geografischen Umgebung gemäß der ermittelten geografischen Umgebung entspricht;
wobei der Schritt (a) umfasst:
Beschaffen durch das Endgerät von geografischen Standortinformationen des Endgeräts, indem ein Positionsbestimmungssystem verwendet wird; und
Ermitteln durch das Endgerät der geografischen Umgebung, in der sich das Endgerät gemäß den beschafften geografischen Standortinformationen und gemäß einer Karte befindet, die lokal in dem Endgerät gespeichert ist.

2. Netzwerksuchverfahren für ein Endgerät nach Anspruch 1, wobei die geografischen Standortinformationen Breitengrad- und Längengradinformationen oder geografische Koordinaten umfassen; und
wobei das Ermitteln durch das Endgerät der geografischen Umgebung, in der sich das Endgerät gemäß den beschafften geografischen Standortinformationen und gemäß einer Karte befindet, die lokal in dem Endgerät gespeichert ist, umfasst:
Eingeben durch das Endgerät der Breitengrad- und Längengradinformationen oder der geografischen Koordinaten in die Karte, die lokal in dem Endgerät gespeichert ist, und Ermitteln der geografischen Umgebung, in der sich das Endgerät gemäß einem geografischen Namen befindet, der in der lokal gespeicherten Karte angezeigt wird.

3. Netzwerksuchverfahren für ein Endgerät nach einem der Ansprüche 1 bis 2, wobei das Einstellen durch das Endgerät eines Netzwerksuchzeitintervalls, das der geografischen Umgebung gemäß der ermittelten geografischen Umgebung entspricht, umfasst:
Einstellen des Netzwerksuchzeitintervalls für das Endgerät, damit das Intervall größer als ein erster Zeitschwellenwert ist, wenn die geografische Umgebung zu einer ersten geografischen Umgebung gehört, in der ein Netzwerksignal geringer als ein voreingestellter Schwellenwert ist; und/oder
Einstellen des Netzwerksuchzeitintervalls für das Endgerät, damit das Intervall kleiner als ein zweiter Zeitschwellenwert ist, wenn die geografische Umgebung zu einer zweiten geografischen Umgebung gehört, in der ein Netzwerksignal größer als ein voreingestellter Schwellenwert ist.

4. Netzwerksuchverfahren für ein Endgerät nach einem der Ansprüche 1 bis 3, das außerdem umfasst:
Ausführen einer Netzwerksuchoperation, wenn das Endgerät erkennt, dass eine Hintergrundbeleuchtung eines Bildschirms aktiviert ist.

5. Endgerät umfassend:
ein Positionsbestimmungsmodul (21), das konfiguriert ist zum Beschaffen von geografischen Standortinformationen des Endgeräts und Ermitteln einer geografischen Umgebung, in dem sich das Endgerät gemäß den beschafften geografischen Standortinformationen befindet; und
ein Zeitraumeinstellmodul (22), das konfiguriert ist zum Einstellen eines Netzwerksuchzeitintervalls, das der geografischen Umgebung gemäß der geografischen Umgebung entspricht, die durch das Positionsbestimmungsmodul ermittelt wurde;
wobei das Positionsbestimmungsmodul (21) umfasst:
ein Standortinformationsbeschaffungsmodul (211), das konfiguriert ist zum Beschaffen von geografischen Standortinformationen des Endgeräts, indem ein Positionsbestimmungssystem verwendet wird; und
ein Modul zum Ermitteln einer geografischen Umgebung (212), das konfiguriert ist zum Ermitteln der geografischen Umgebung, in der sich das Endgerät gemäß den geografischen Standortinformationen, die durch das Standortinformationsbeschaffungsmodul beschafft wurden, und gemäß einer Karte befindet, die lokal in dem Endgerät gespeichert ist.

6. Endgerät nach Anspruch 5, wobei die geografischen Standortinformationen Breitengrad- und Längengradinformationen oder geografische Koordinaten umfassen; und
wobei das Modul zum Ermitteln einer geografischen Umgebung insbesondere konfiguriert ist zum Eingeben der Breitengrad- und Längengradinformationen oder der geografischen Koordinaten in die Karte, die lokal in dem Endgerät gespeichert ist, und zum Ermitteln der geografischen Umgebung, in der sich das Endgerät gemäß einem geografischen Namen befindet, der in der lokal gespeicherten Karte angezeigt wird.

7. Endgerät nach einem der Ansprüche 5 bis 6, wobei das Zeitraumeinstellmodul (22) umfasst:
ein Ermittlungsmodul (221), das konfiguriert ist zum Ermitteln, ob die geografische Umgebung zu einer ersten geografischen Umgebung gehört, in der ein Netzwerksignal geringer als ein voreingestellter Schwellenwert ist, und/oder konfiguriert ist zum Ermitteln, ob die geografische Umgebung zu einer zweiten geografischen Umgebung gehört, in der ein Netzwerksignal größer als ein voreingestellter Schwellenwert ist, und/oder
ein Einstellmodul (222), das konfiguriert ist zum Einstellen des Netzwerksuchzeitintervalls für das Endgerät, damit das Intervall größer als ein erster Zeitschwellenwert ist, wenn die geografische Umgebung zu der ersten geografischen Umgebung gehört, und Einstellen des Netzwerksuchzeitintervalls für das Endgerät, damit das Intervall kleiner als ein zweiter Zeitschwellenwert ist, wenn die geografische Umgebung zu der zweiten geografischen Umgebung gehört.

8. Endgerät nach einem der Ansprüche 5 bis 7, außerdem umfassend:
ein Dringlichkeitsnetzwerksuchmodul (23), das konfiguriert ist zum Ausführen einer Netzwerksuchoperation, wenn das Endgerät erkennt, dass eine Hintergrundbeleuchtung eines Bildschirms aktiviert ist.

9. Computerlesbares Medium, wobei das computerlesbare Medium geeignet ist zum Speichern eines Programms und wobei das Programm ausgeführt wird, um alle Schritte des Verfahrens nach einem der Ansprüche 1 bis 4 auszuführen.

## Revendications

1. Procédé de recherche de réseau pour un terminal, comprenant les étapes consistant :
(a) à acquérir, au moyen d'un terminal, des informations d'emplacement géographique du terminal et à déterminer un environnement géographique dans lequel le terminal est localisé en fonction des informations d'emplacement géographique acquises ; et
(b) à fixer, au moyen du terminal, un intervalle de temps de recherche de réseau correspondant à l'environnement géographique en fonction de l'environnement géographique déterminé ;
dans lequel l'étape (a) consiste :
à acquérir, au moyen du terminal, les informations d'emplacement géographique du terminal en utilisant un système de positionnement ; et
à déterminer, au moyen du terminal, l'environnement géographique dans lequel le terminal est localisé en fonction des informations d'emplacement géographique acquises et d'une carte qui est stockée localement sur le terminal.

2. Procédé de recherche de réseau pour un terminal selon la revendication 1, dans lequel les informations d'emplacement géographique comportent des informations de latitude et de longitude ou des coordonnées géographiques ; et
la détermination, par le terminal, de l'environnement géographique dans lequel le terminal est localisé en fonction des informations d'emplacement géographique acquises et d'une carte qui est stockée localement sur le terminal consiste :
à entrer, au moyen du terminal, les informations de latitude et de longitude ou les coordonnées géographiques dans la carte qui est stockée localement sur le terminal, et à déterminer l'environnement géographique dans lequel le terminal est localisé en fonction d'un nom géographique affiché sur la carte stockée localement.

3. Procédé de recherche de réseau pour un terminal selon l'une quelconque des revendications 1 à 2, dans lequel la fixation, par le terminal, d'un intervalle de temps de recherche de réseau correspondant à l'environnement géographique en fonction de l'environnement géographique déterminé consiste :
à fixer l'intervalle de temps de recherche de réseau pour le terminal de sorte à être supérieur à un premier seuil de temps lorsque l'environnement géographique appartient à un premier environnement géographique dans lequel un signal de réseau est inférieur à un seuil prédéfini ; et/ou
à fixer l'intervalle de temps de recherche de réseau pour le terminal de sorte à être inférieur à un second seuil de temps lorsque l'environnement géographique appartient à un second environnement géographique dans lequel un signal de réseau est supérieur à un seuil prédéfini.

4. Procédé de recherche de réseau pour un terminal selon l'une quelconque des revendications 1 à 3, consistant en outre :
à effectuer une opération de recherche de réseau lorsque le terminal détecte qu'un rétroéclairage d'un écran est activé.

5. Terminal comprenant :
un module de positionnement (21), configuré pour acquérir des informations d'emplacement géographique du terminal et pour déterminer un environnement géographique dans lequel le terminal est localisé en fonction des informations d'emplacement géographique acquises ; et
un module de fixation de période (22), configuré pour fixer un intervalle de temps de recherche de réseau correspondant à l'environnement géographique en fonction de l'environnement géographique déterminé par le module de positionnement ;
dans lequel le module de positionnement (21) comprend :
un module d'acquisition d'informations d'emplacement (211), configuré pour acquérir des informations d'emplacement géographique du terminal en utilisant un système de positionnement ; et
un module de détermination d'environnement géographique (212), configuré pour déterminer l'environnement géographique dans lequel le terminal est localisé, en fonction des informations d'emplacement géographique acquises par le module d'acquisition d'informations d'emplacement et d'une carte qui est stockée localement sur le terminal.

6. Terminal selon la revendication 5, dans lequel les informations d'emplacement géographique comportent des informations de latitude et de longitude ou des coordonnées géographiques ; et
le module de détermination d'environnement géographique est spécialement configuré pour entrer les informations de latitude et de longitude ou les coordonnées géographiques dans la carte qui est stockée localement sur le terminal, et pour déterminer l'environnement géographique dans lequel le terminal est localisé en fonction d'un nom géographique affiché sur la carte stockée localement.

7. Terminal selon l'une quelconque des revendications 5 à 6, dans lequel le module de fixation de période (22) comprend :
un module de détermination (221), configuré pour déterminer si l'environnement géographique appartient à un premier environnement géographique dans lequel un signal de réseau est inférieur à un seuil prédéfini ; et/ou configuré pour déterminer si l'environnement géographique appartient à un second environnement géographique dans lequel un signal de réseau est supérieur à un seuil prédéfini ; et/ou
un module de fixation (222), configuré pour fixer l'intervalle de temps de recherche de réseau pour le terminal de sorte à être supérieur à un premier seuil de temps lorsque l'environnement géographique appartient au premier environnement géographique ; et pour fixer l'intervalle de temps de recherche de réseau pour le terminal de sorte à être inférieur à un second seuil de temps lorsque l'environnement géographique appartient au second environnement géographique.

8. Terminal selon l'une quelconque des revendications 5 à 7, comprenant en outre :
un module de recherche de réseau en urgence (23), configuré pour effectuer une opération de recherche de réseau lorsque le terminal détecte qu'un rétroéclairage d'un écran est activé.

9. Support lisible par ordinateur, dans lequel le support lisible par ordinateur est conçu pour stocker un programme et le programme est exécuté pour réaliser toutes les étapes du procédé selon l'une quelconque des revendications 1 à 4.
